# EUROPEAN PATENT APPLICATION

(11) **EP 2 138 952 A2**
(43) Date of publication of application: **30.12.2009**
(21) Application number: 09005124.4
(22) Date of filing: 07.04.2009
(51) Int. Cl.: G06K 9/03

(54) **Video coding system, sorting system, coding method and sorting method**

(30) Priority: 27.06.2008 JP 2008169314
(71) Applicant: Kabushiki Kaisha Toshiba, Minato-ku, Tokyo 105-8001 (JP)
(72) Inventor: Tanaka, Toshiyuki, Tokyo 105-8001 (JP)
(74) Representative: Kramer - Barske - Schmidtchen

(57) **Abstract**

A video coding system specifying sorting information included in an image has a VCS (2) accumulating an image and an off-line OCR (3) applying character recognition to the image. The VCS (2) accumulates an image including the sorting information described in characters. When the image distributed from the VCS (2) and information presumed to the sorting information described on the image are given to the off-line OCR (3), the off-line OCR (3) applies a character recognition processing to the image, while assuming the given information, presumed to be the sorting information, to be a recognition result. Based on the result of the character recognition processing, the off-line OCR (3) confirms whether or not the given information is correct as the sorting information described on the image.

## Description

The present invention relates to, for example, a video coding system, which has a character recognition device in which sorting information, such as address information, described on paper sheet is recognized by a character recognition processing and a terminal device through which an operator inputs the sorting information by key entry, and to a sorting system for sorting the paper sheet based on the sorting information specified by the video coding system.

For example, a video coding system for coding address information described on paper sheet is described in Jpn. Pat. Appln. KOKAI Publication No. 2000-99633 (Document 1). The video coding system described in Document 1 determines whether or not a result of operator's key entry from a keyboard or the like matches information in an address database. In Document 1, a recognition hierarchy of a character recognition processing (recognition processing performed by an off-line OCR) is narrowed based on the result of an operator's key entry, and dictionary data limited to correspond to the narrowed recognition hierarchy is created, whereby the recognition performance of the character recognition processing can be improved.

However, in Document 1, whether or not the information input by key entry from an operator is correct is determined only by matching the result of key entry and the information of the address database. Namely, in Document 1, the key entry result and the actual address information in an image of a paper sheet are not compared with each other. In other words, in Document 1, when the key entry result matches the information of the address database, even if the key entry result is different from the information actually described on a paper sheet, the key entry result may be adopted as correct address information.

Further, in Document 1, when the key entry result and the information of the address database do not match each other, the recognition processing is performed by off-line OCR. However, in Document 1, it is premised that the result of the operator's key entry is correct. Therefore, in the recognition processing performed by the off-line OCR in Document 1, it is considered that incorrect key entry in the key entry result is unlikely.

Further, in the video coding system, for the purpose of improving the efficiency of an operator's key entry from a keyboard, specific words in the words used in the address information may be allocated to special keys. For example, it is considered that the names of cities and towns are allocated to the special keys. In this mode, even when the word itself, such as the name of a town, allocated to the special key is correctly input, the selection of the special key itself may be incorrect. In this case, the result of an operator's key entry and the information of the address database are completely consistent with each other, and therefore, even if the key entry result is different from the address information actually described on the paper sheet, the key entry result is adopted as the address information.

An object of the invention is to provide a video coding system, which can surely specify sorting information included in an image, a sorting system, a video coding method, and a sorting method.

According to an aspect of the present invention, there is provided a video coding system which specifies sorting information included in an image, comprising: an accumulation section which accumulates an image including the sorting information expressed by characters; and a recognition section which, when information presumed to be the sorting information included in the image accumulated in the accumulation section is given, applies a character recognition processing to the image, while assuming the given information, presumed to be the sorting information, to be a recognition result, so as to confirm whether or not the given information is correct as the sorting information included in the image.

According to an aspect of the present invention, there is provided a sorting system which sorts paper sheet based on sorting information given to the paper sheet, comprising: a scanner which scans an image on the paper sheet having the sorting information; a first recognition section which applies a recognition processing for the sorting information to the image on the paper sheet scanned by the scanner; an accumulation section which accumulates the image on the paper sheet in which the sorting information is not recognized by the first recognition section; a terminal section used for input by key entry of the sorting information of the paper sheet on the basis of the image on the paper sheet accumulated in the accumulation section; and a second recognition section which applies a recognition processing for the sorting information to the image on the paper sheet, while assuming key entry information, input by key entry through the terminal section, to be a recognition result, so as to confirm whether or not the key entry information is correct as the sorting information given to the paper sheet.

According to an aspect of the present invention, there is provided a video coding method, used for a video coding system specifying sorting information included in an image, comprising: accumulating an image including the sorting information expressed by characters; and when information presumed to be the sorting information included in the accumulated image is given, applying a character recognition processing to the image, while assuming the given information, presumed to be the sorting information, to be a recognition result, so as to confirm whether or not the given information is correct as the sorting information included in the image.

According to an aspect of the present invention, there is provided a sorting method, used for a sorting system for sorting paper sheet based on sorting information given to the paper sheet, comprising: scanning an image on the paper sheet having the sorting information; applying a recognition processing for the sorting information to the scanned image on the paper sheet; accumulating the image on the paper sheet in which the sorting information is not recognized; and when the sorting information of the paper sheet is input by key entry based on the accumulated image on the paper sheet, applying a recognition processing for the sorting information to the mage of the paper sheet, while assuming key entry information, input by key entry, to be a recognition result, so as to confirm whether or not the key entry information is correct as the sorting information given to the paper sheet.

The invention can be more fully understood from the following detailed description when taken in conjunction with the accompanying drawings, in which:
FIG. 1 is a schematic configuration diagram of a sorting system according to an embodiment of the invention;
FIG. 2 is a view for schematically explaining a flow of data as a first processing example in the sorting system;
FIG. 3 is a flow chart for explaining a flow of the first processing example in the sorting system;
FIG. 4 is a flow chart for explaining a flow of a second processing example in the sorting system; and
FIG. 5 is a flow chart for explaining a flow of a third processing example in the sorting system.

Hereinafter, an embodiment for realizing the invention will be described with reference to the drawings.

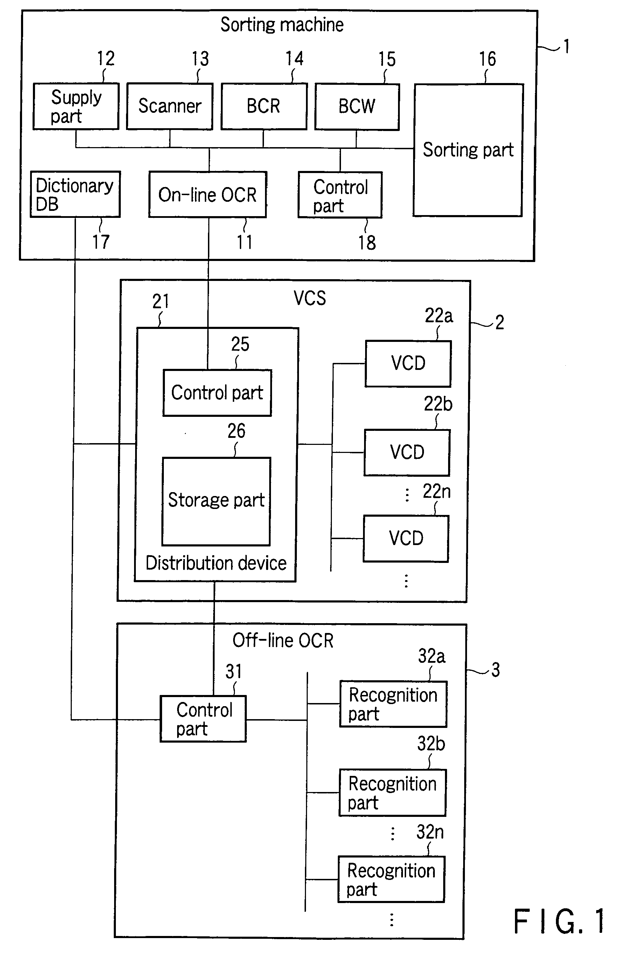

FIG. 1 is a schematic configuration diagram of a sorting system according to an embodiment of the invention.

The sorting system is, as shown in FIG. 1, constituted of a sorting machine 1, a VCS (video coding system) 2, and an off-line OCR (second recognition part) 3, and the like. The sorting system of FIG. 1 sorts paper sheet having a first surface with figures or letters, which are information (sorting information) showing sorting destinations. For example, a system for sorting mail with a name and address based on address information is assumed to be used as the sorting system.

The sorting machine 1 performs sorting processing of paper sheet based on information (sorting information and destination information) showing the sorting destination given to the paper sheet. The sorting machine 1 has an on-line OCR (first recognition part) 11 for recognizing the sorting information given to the paper sheet. The sorting machine 1 sorts the paper sheet, in which the sorting information can be recognized by the on-line OCR 11, based on the sorting information.

The VCS 2 is a system for performing coding processing of the sorting information of the paper sheet in which the sorting information cannot be specified by the sorting machine 1. The VCS 2 has a distribution device (image accumulation distribution device) 21 and a plurality of video coding disks (VCD) 22. The distribution device 21 has a function of accumulating information such as an image on the paper sheet in which the sorting information cannot be specified, a function of distributing the accumulated information such as an image on the paper sheet to each VCD 22 or the off-line OCR 3, and a function of transmitting information such as the sorting information, supplied from each VCD 22 or the off-line OCR 3, to the sorting machine 1. Each VCD 22 is used for key entry of the sorting information of the paper sheet by an operator from a keyboard. The VCD 22 accepts the key entry of the sorting information from the operator in a state that the image on the paper sheet given from the distribution device 21 is displayed on a display part.

The off-line OCR 3 is operated as the second recognition part or a recognition part. The off-line OCR 3 performs processing for recognizing the sorting information from the image on the paper sheet, based on a recognition algorithm different from that used in the on-line OCR 11 provided in the sorting machine 1. The off-line OCR 3 is connected to the distribution device 21 of the VCS 2 and the like. The off-line OCR 3 applies recognition processing for the sorting information to the image on the paper sheet received from the distribution device 21 of the VCS 2 to return the result of the recognition processing to the distribution device 21.

First, the internal configuration of the sorting machine 1 will be described.

In the configuration example shown in FIG. 1, the sorting machine 1 includes the on-line OCR 11, a supply part 12, a scanner 13, a bar code reader (BCR) 14, a bar code writer (BCW) 15, a sorting part 16, a dictionary database (DB) 17, and a control part 18. The sorting machine 1 further includes an operation panel (not shown) used for input of various operation instructions from an operator.

The on-line OCR 11 is operated as the first recognition part. The on-line OCR 11 recognizes the sorting information of the paper sheet from the image on the paper sheet supplied from the distribution device 21. The dictionary database 17 stores dictionary data including the address information as the sorting information. The control part 18 controls the overall operation of the sorting machine 1 and is constituted of a CPU, a memory, and various interfaces. The control part 18 realizes various controls in the sorting machine 1 by virtue of the CPU executing a program stored in a memory. For example, the control part 18 controls each of the above parts to thereby perform control for sorting the paper sheet based on the sorting information described on the paper sheet. Hereinafter, each part will be described in detail.

The image (the image on the paper sheet or a letter image) scanned from the paper sheet by the scanner 13 is supplied to the on-line OCR 11. When the image on the paper sheet is supplied, the on-line OCR 11 detects a destination region from the image on the paper sheet to cut out characters, which correspond to the sorting information, from the destination region, and thus, to perform character recognition. The on-line OCR 11 then compares the cut-out characters with the dictionary data stored in the dictionary database 17 to perform recognition of the sorting information by, for example, a matching method. In the on-line OCR 11, the recognition processing is performed within a predetermined time permitting the sorting of the paper sheet fed into the sorting machine 1 (namely, a time for feeding the paper sheet from the scanner 13 to the bar code writer 15). In the recognition processing in the on-line OCR 11, the processing time is strictly restricted. Therefore, in the on-line OCR 11, a recognition method based on the recognition algorithm which can obtain the recognition result at a high speed is adopted.

When the sorting information cannot be recognized from the image on the paper sheet, or when the recognition result requiring a verification processing to be described later is obtained, the on-line OCR 11 transfers, as a set of information, the image on the paper sheet, discrimination information of the paper sheet, and additional information (hereinafter also referred to as VC information) to the VCS 2. The additional information may include the recognition result provided by the on-line OCR 11 (information on part which can be recognized). As the recognition result provided by the on-line OCR 11 included in the additional information, there is information such as a size of the paper sheet, a size of characters, a direction of the characters, a describing direction of the sorting information, a character type, recognition depth, and information showing a part required to be subjected to the processing by the VCS 2. This additional information is used as information assisting a coding task performed in the VCD 22 and the recognition processing performed by the off-line OCR 3.

A plurality of the paper sheet to be subjected to the sorting processing are set in the supply part 12. The supply part 12 delivers these paper sheet one by one at a fixed interval to a feed path (not shown). The feed path through which the paper sheet are fed includes the scanner (reading means) 13, the bar code reader 14, the bar code writer 15, and the sorting part 16. The scanner 13 scans the image on the surface described with the sorting information of the paper sheet being fed and transmits the scanned image to the on-line OCR 11.

The bar code reader 14 reads a bar code attached to the paper sheet being fed on the feed path. The bar code writer 15 attaches (prints) the bar code on the paper sheet being fed on the feed path. For example, a bar code is applied to the paper sheet which have been already been processed in the sorting machine 1 one or more times. With regard to the paper sheet previously printed with a bar code, the sorting information is determined based on the reading result of the bar code from the bar code reader 14. With regard to the paper sheet with no bar code, the on-line OCR 11 applies the recognition processing for the sorting information to the image scanned by the scanner 13. In this case, the bar code writer 15 attaches the bar code, corresponding to the recognition result of the sorting information from the on-line OCR 11, to the paper sheet.

For example, as the bar code attached to the paper sheet, an ID code and a sort code are possible. The ID code is assumed to be obtained by encoding the discrimination information of the paper sheet, and the sort code is assumed to be obtained by encoding the sorting information of the paper sheet. In the sorting machine 1 in this operation mode, the sort code showing the sorting information is printed on the paper sheet in which the sorting information can be recognized by the on-line OCR 11. Meanwhile, the ID code for discriminating the paper sheet is printed on the paper sheet in which the sorting information cannot be recognized by the on-line OCR 11. However, in the sorting machine 1 in such an operation mode that the processing performed by the VCS 2 (the coding processing performed by the VCD 22 or the recognition processing performed by the off-line OCR 3) is completed before the paper sheet reach the bar code writer 15 in the sorting machine 1, a bar code obtained by encoding the sorting information obtained by the VCS 2 is attached to the paper sheet in which the on-line OCR 11 fails recognition.

The bar code writer 15 is installed so that a feeding time to feed the paper sheet between a scanning position where the scanner 13 scans an image and a printing position where the bar code writer 15 prints a bar code is at least, and not less than, a time required for the recognition processing for the sorting information performed by the on-line OCR 11. According to the operation modes, before the paper sheet in the sorting machine 1 reach the bar code writer 15, the sorting machine 1 may obtain, in addition to the processing result of the recognition processing for the sorting information performed by the on-line OCR 11 as the first recognition part, the processing result from the off-line OCR (external OCR) 3 as the second recognition part or the VCD 22 as a coding processing part. In this case, the sorting machine 1 may have a delay feed path provided between the scanner 13 and the bar code writer 15 so that the processing result from the off-line OCR 3 or the VCD 2 is obtained, while the paper sheet are fed between the scanner 13 and the bar code writer 15.

The sorting part 16 for sorting the paper sheet is provided on the downstream side of the bar code writer 15 in a paper sheet feeding directionpaper sheet. The sorting part 16 has, for example, a plurality of sorting pockets (not shown) partitioned by plural columns and rows. Each pocket is corresponded to the sorting information. The sorting part 16 further has a VCS elimination pocket (not shown) in which the paper sheet in which the sorting destination cannot be recognized are accumulated. The paper sheet accumulated in the VCS elimination pocket are supplied again to the supply part 12 after confirmation of the sorting information in the VCS 2, and are then sorted again based on the ID code of the paper sheet and the sorting information input in the VCS 2.

Next, the VCS 2 and the off-line OCR 3 will be described.

The VCS 2 is, as shown in FIG. 1, constituted of the distribution device (image accumulation distribution device) 21, and a plurality of video coding disks (VCD) 22 (22a, 22b, ..., 22n, ...). The distribution device 21 is connected to each of the VCDs 22. The distribution device 21 and the VCD 22 can transmit and receive information including an image. The distribution device 21 is further connected to the on-line OCR 11 and the off-line OCR 3 of the sorting machine 1.

The distribution device 21 controls to supply the image on the paper sheet, which cannot be recognized by the sorting machine 1, to the VCD 22 or the off-line OCR 3 and to return the processing result from the VCD 22 or the off-line OCR 3 to the sorting machine 1. The distribution device 21 is constituted of, for example, a computer. The distribution device 21 has a control part 25, a storage part 26, and the like.

The control part 25 is constituted of, for example, a CPU, a memory, and various interfaces. The control part 25 realizes various processing functions by virtue of the execution of a program stored in the memory by means of the CPU.

The storage part 26 is operated as an accumulation part. The storage part 26 stores information including the image on the paper sheet. For example, the storage part 26 stores the VC information including the image on the paper sheet supplied from the sorting machine 1, the information (input by key entry from an operator) supplied from the VCD 22, and information showing the recognition result from the off-line OCR 3 or the result of the verification processing.

The VCD 22 is operated as a terminal part. The VCD 22 is constituted of, for example, a computer connected with a display, a keyboard, and the like. The VCD 22 is operated for operator's key entry of the sorting information with respect to the VC information distributed from the distribution device 21. Namely, the VCD 22 displays, on a display, the image on the paper sheet included in the VC information distributed from the distribution device 21 and the additional information. In this state, the VCD 22 makes the operator input by key entry the sorting information. When the operator inputs by key entry the sorting information from a keyboard or the like, the VCD 22 returns the input information to the distribution device 21.

In this embodiment, although it is assumed that the coding processing performed by the VCD 22 is mainly performed in an off-line state, the invention is not limited thereto. For example, according to the operation modes, the VCS 2 and the VCD 22 may return a coding processing result (key entry information) to the sorting machine 1 while the paper sheet are fed into the sorting machine 1. In addition, the key entry information from the VCD 22 operated as the on-line VCD can be subjected to the verification processing by the off-line OCR 3 while the paper sheet are fed into the sorting machine 1.

The off-line OCR 3 applies the recognition processing for the sorting information to the image on the paper sheet supplied from the distribution device 21. In the off-line OCR 3, the OCR processing is performed based on a recognition algorithm different from that of the on-line OCR 11. The restriction of the time of the recognition processing performed by the off-line OCR 3 is more relaxed than the recognition processing performed by the on-line OCR 11. Namely, the recognition processing performed by the off-line OCR 3 can take more processing time than the recognition processing performed by the on-line OCR 11. Thus, the off-line OCR 3 uses various algorithms and can perform more accurate recognition processing than the on-line OCR 11.

Further, the off-line OCR 3 has not only a function of applying the recognition processing for the sorting information to the image on the paper sheet but also a function of performing the verification processing for confirming whether or not information received from outside (for example, the key entry information obtained by the key entry in the VCD 22 or the recognition result from the on-line OCR 11) is correct as the sorting information. The verification processing for determining whether or not the information received from outside is correct as the sorting information will be described later in detail.

In this embodiment, the processing performed by the off-line OCR 3 is assumed to be mainly performed in the off-line state. However, the processing is performed not only in the off-line state. For example, according to the operation mode, in the off-line OCR 3, the recognition processing result of the sorting information or the verification processing result of the information received from outside (for example, the key entry information from the VCD 22) may be obtained while the paper sheet are fed into the sorting machine 1. Also in this case, the off-line OCR 3 operated as the second recognition part performs the recognition processing for the sorting information or the verification processing based on the recognition algorithm different from the on-line OCR 11 operated as the first recognition part.

The off-line OCR 3 has, as shown in FIG. 1, a control part 31 and a plurality of recognition parts 32 (32a, 32b, ...), and the like. The control part 31 distributes the information such as the image on the paper sheet from the distribution device 21 to each of the recognition parts 32 and controls to transmit the recognition result from each of the recognition parts 32 to the distribution device 21. Each of the recognition parts 32 as the off-line OCR applies the recognition processing to one image on the paper sheet. Each of the recognition parts 32 applies the recognition processing for the sorting information to the image on the paper sheet or performs the verification processing with the use of various algorithms on the basis of the control performed by the control part 31.

Next, the recognition algorithm used in the off-line OCR 3 will be described.

Each of the recognition parts 32 in the off-line OCR 3 has a function of performing a processing for recognizing the sorting information from the image on the paper sheet, using a program for recognition processing and a function of performing the verification processing for confirming whether or not the information received from outside (information to be confirmed) is correct as the sorting information, using a program for verification processing. The program for verification processing is constituted of, for example, a recognition algorithm in which the recognition processing for the sorting information is applied to the image on the paper sheet while the information to be confirmed is assumed to be an answer, whereby the information to be confirmed is determined whether or not to be correct as the sorting information.

The recognition algorithm used in the program for verification processing has the following functions of:
(1) dealing the information to be confirmed as the sorting information described on the paper sheet;
(2) performing the recognition processing for the sorting information, while assuming that there is information to be confirmed in a sorting information region in the image on the paper sheet given with the information to be confirmed; and
(3) when the degree of coincidence between the information to be confirmed and the recognition result of the sorting information is more than a predetermined threshold value, determining the information to be confirmed to be a correct result, and when the degree of coincidence between the information to be confirmed and the recognition result of the sorting information is less than the predetermined threshold value, determining the information to be confirmed to have an incorrect part.

Further, in the verification processing performed by the off-line OCR 3, weighting may be applied to the recognition result of the sorting information. Namely, in the verification processing performed by the off-line OCR 3, the information received from outside is assumed to be an answer. Thus, the off-line OCR 3 can apply weighting to the recognition result of the sorting information on the basis of the information received from outside. According to this function, the degree of coincidence between the information received from outside and the recognition result of the sorting information is dynamically changed in response to the weighting. Accordingly, in the recognition algorithm used in the program for verification processing using a weighting function, also with respect to the image on the paper sheet which cannot be recognized when the information assumed to be an answer is not given, the sorting information of the paper sheet can be recognized, i.e., whether or not the information received from outside is correct can be confirmed.

Further, in the verification processing performed by the off-line OCR 3, when the information received from outside is partially incorrect, the incorrect part may be corrected. Namely, in the verification processing performed by the off-line OCR 3, as described above, it is considered that the information received from outside is assumed to be an answer, whereby the recognition ratio of the sorting information is improved. In such a case, if the information received from outside is partially incorrect, it is predicted that the degree of coincidence between these incorrect parts and the recognition result is extremely low. The information with partially low degree of coincidence can be corrected based on the recognition result. However, even in this mode, when the degree of coincidence between the overall information received from outside and the overall recognition result is low (namely, when the information received from outside is substantially different from the recognition result), the off-line OCR 3 determines that the information received from outside is incorrect.

In this sorting system, the information to be confirmed by the verification processing is assumed to be the sorting information (key entry information) input by operator's key entry in each of the VCDs 22 in the VCS 2 or the recognition result of the sorting information by the on-line OCR 11 in the sorting machine 1.

Next, an example of the algorithm used in the verification processing, applied to the key entry information by the off-line OCR 3, will be described.

In this example, the character information expressing the overall sorting information (for example, address) and number information expressing some parts of the sorting information by figures (for example, zip code) are assumed to be given to the paper sheet. It is premised that, with respect to such paper sheet, a processing for inputting by key entry the number information as a part of the sorting information and a processing for inputting by key entry the character information in a part not expressed in the number information (for example, block information following a zip code) are performed twice in each VCD 22.

In the above operation mode, the distribution device 21 first requests the VCD 22 to do the key entry of the number information correspond to the VC information. In the VCD 22 having received the request of key entry of the number information from the distribution device 21 and the VC information distributed from the distribution device 21, the operator inputs by key entry only the number information in the VC information (the image on the paper sheet). The result input by key entry is returned, as the key entry information of the number information on the paper sheet, from the VCD 22 to the distribution device 21. When the distribution device 21 receives the request of the key entry of the number information, the distribution device 21 accumulates the key entry result of the number information returned from the VCD 22 so that the key entry result corresponds to the VC information.

Further, the distribution device 21 requests each of the VCDs 22 to do the key entry of the character information to the VC information corresponded to the number information. In the VCD 22 having received the request of the key entry of the character information from the distribution device 21 and the VC information distributed from the distribution device 21, the character information (the character information in at least a part not expressed by the number information) in the VC information (the image on the paper sheet) is input by key entry from an operator. The result input by key entry is returned, as the key entry information of the character information on the paper sheet, from the VCD 22 to the distribution device 21. When the distribution device 21 receives the request of the key entry of the number information, the distribution device 21 accumulates the key entry result of the character information returned from the VCD 22 so that the key entry result corresponds to the VC information.

According to the above processing, the VC information in which the key entry result of the number information and the key entry result of the character information are corresponded to each other is accumulated in the distribution device 21. In this example, the character information in a part expressed by the number information in the sorting information should correspond to the number information. For example, the zip code as the number information and the character information of the information before a block in the address information (for example, the names of prefectures, cities and towns) are corresponded one to one.

Therefore, the off-line OCR 3 performs character recognition for recognizing characters corresponded to the number information, while assuming the character information corresponding to the number information to be an answer, whereby the off-line OCR 3 performs the verification processing for confirming whether or not the character information, corresponding to the number information as the key entry result, and the character information as the result of the character recognition match each other (whether or not the degree of coincidence is not less than a predetermined value). By virtue of the verification processing, the off-line OCR 3 can determine whether or not the information input by the operator's key entry in the VCD 22 is correct.

With respect to the paper sheet with no number information, the character information corresponding to the number information is input by key entry from a keyboard of the VCD 22. For example, the character information corresponding to the number information includes the information before a block in the address information (for example, the names of prefectures, cities and towns). Abbreviated keys of the keyboard of the VCD 22 are often allocated to the information such as the names of prefectures, cities and towns. In this case, the off-line OCR 3 can perform the above verification processing in order to confirm the information input by key entry through the abbreviated key.

Next, a first processing example used in the present sorting system will be described.

In the first processing example, the processing (verification processing) for confirming the key entry information input by key entry in the VCD 22 is mainly performed by the off-line OCR 3.

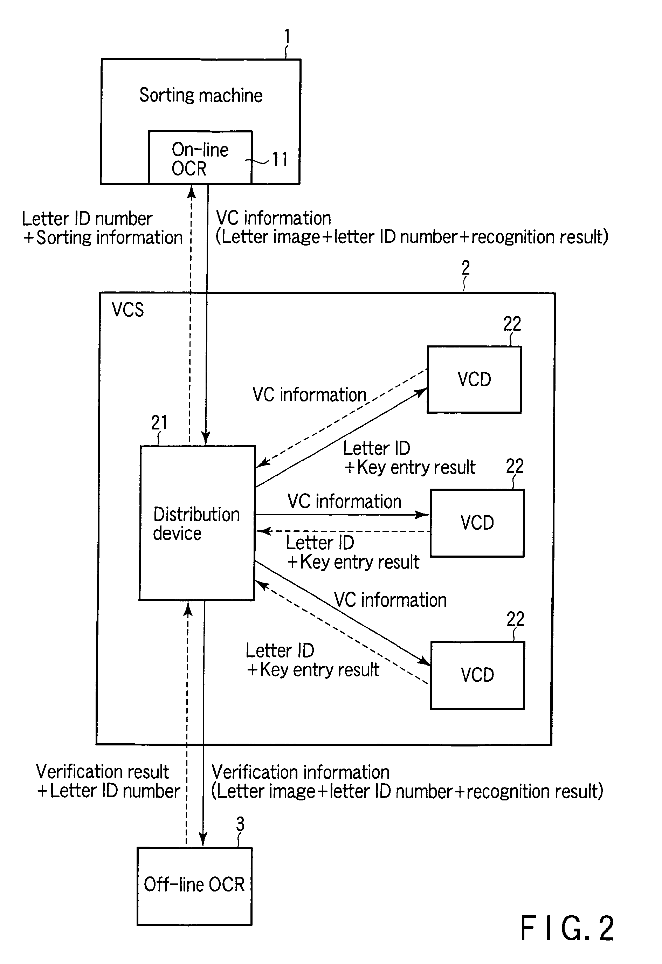

FIG. 2 is a view for schematically explaining a flow of data as the first processing example in the sorting system.

First, as shown in FIG. 2, the information (hereinafter also referred to as VC information) including the image on the paper sheet (letter images) from the on-line OCR 11 in the sorting machine 1, the discrimination information (letter ID number), and the recognition result provided by the on-line OCR 11 (recognition result) is supplied to the distribution device 21. The distribution device 21 accumulates the VC information from the sorting machine 1 in the storage part 26. The distribution device 21 sequentially distributes the VC information, accumulated in the storage part 26, to the VCD 22 or the off-line OCR 3.

For example, when the recognition processing performed by the off-line OCR 3 is given preference over the coding processing performed by the VCD 22, the distribution device 21 first distributes the accumulated VC information to the off-line OCR 3. The off-line OCR 3, having received the VC information distributed from the distribution device 21, applies the recognition processing for the sorting information to the image on the paper sheet included in the VC information distributed from the distribution device 21 to return the recognition result to the distribution device 21. Each of the recognition parts 32 of the off-line OCR 3 executes the program for recognition processing, whereby the recognition processing for the sorting information applied to the image on the paper sheet included in the VC information is realized.

When the distribution device 21 has received information, indicating the success of the recognition of the sorting information to the VC information, from the off-line OCR 3, the distribution device 21 transmits the recognition result received from the off-line OCR 3, which is the sorting information of the paper sheet of the discrimination information included in the VC information, to the sorting machine 1. Incidentally, when the recognition processing performed by the off-line OCR 3 is not given preference, the distribution device 21 may first distribute the accumulated VC information to any one of the VCDs 22.

When the distribution device 21 has received the information indicating the failure of the recognition of the sorting information as the recognition result distributed from the off-line OCR 3, the distribution device 21 distributes the VC information to any one of the VCDs 22. The VCD 22 having received the VC information from the distribution device 21 performs the coding processing of the sorting information. In the coding processing, the operator inputs by key entry the sorting information of the paper sheet. Namely, the VCD 22 having received the VC information distributed from the distribution device 21 displays the image on the paper sheet on a display (not shown), and when the operator inputs by key entry the information as the sorting information (hereinafter referred to as the key entry information) while the image on the paper sheet is displayed on the display, the VCD 22 performs the coding processing for returning the key entry information to the distribution device 21.

When the distribution device 21 obtains the key entry information from the VCD 22, for the purpose of confirming the key entry information, the distribution device 21 distributes, to the off-line OCR 3, the key entry information (key entry result) and the information (hereinafter referred to as verification information) including the image on the paper sheet (letter image) and the discrimination information (letter ID number). The off-line OCR 3 having received the verification information performs the verification processing for confirming whether or not the key entry information is correct. Each of the recognition parts 32 of the off-line OCR 3 executes the program for verification processing, whereby the verification processing is realized. Namely, in this verification processing, the off-line OCR 3 performs the recognition processing for the sorting information while assuming the key entry information to be the sorting information of the paper sheet, whereby it is determined whether or not the key entry information is correct as the sorting information of the paper sheet. The result of the verification processing is returned from the off-line OCR 3 to the distribution device 21.

When the distribution device 21 obtains the result of the verification processing of the key entry information from the off-line OCR 3, the distribution device 21 fixes the sorting information based on the result of the verification processing to transmit the fixed sorting information, which is the result of the processing applied to the VC information by the VCS 2, to the sorting machine 1. For example, when the key entry information is confirmed to be correct by the verification processing, the distribution device 21 fixes the key entry information as the sorting information to transmit the key entry information, which is the sorting information of the paper sheet, to the sorting machine 1. Meanwhile, when the key entry information is not confirmed to be correct by the verification processing, the distribution device 21 again distributes the VC information to the VCD 22 and again performs the above processing. Note that the fact that the key entry information is not confirmed to be correct may be transmitted from the distribution device 21 to the sorting machine 1.

Next, the flow of the first processing example will be described.

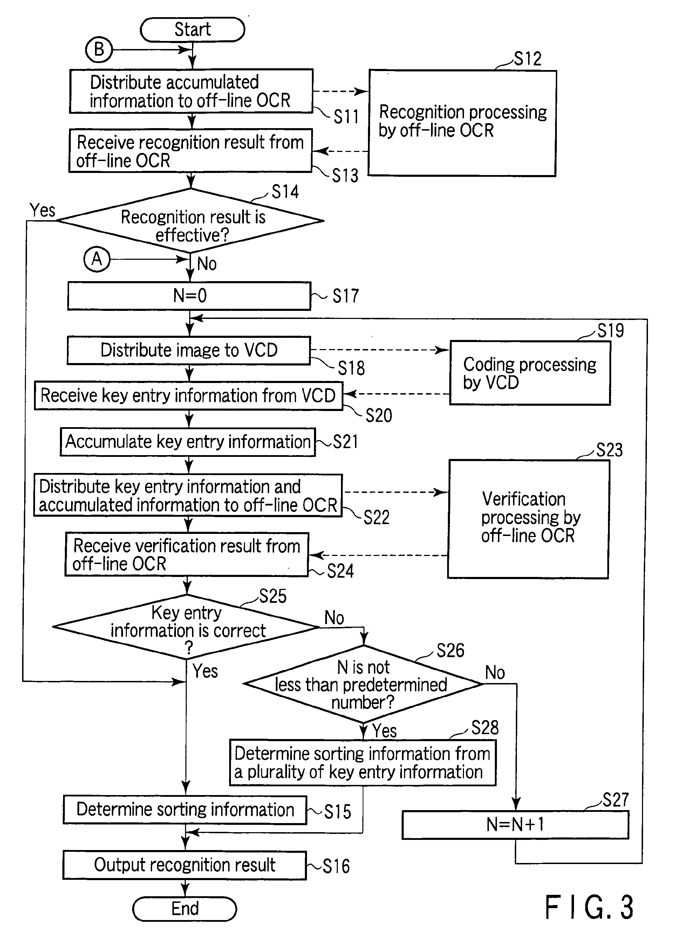

FIG. 3 is a flow chart for explaining the flow of the first processing example in the present sorting system. In this example, as shown in the flow chart of FIG. 3, the operation of the distribution device 21 will be mainly described.

First, the VC information including the image on the paper sheet in which the sorting information cannot be recognized by the on-line OCR 11 of the sorting machine 1 is accumulated in the storage part 26 in the distribution device 21. The recognition processing for the sorting information performed by the off-line OCR 3 is first applied to the VC information accumulated in the storage part 26 in the distribution device 21 (steps S11 to S13). The recognition processing is first applied to the VC information, accumulated in the distribution device 21, by the off-line OCR 3 for the purpose of reducing intervention by an operator and preventing occurrence of incorrect key entry. However, the recognition processing for the sorting information performed by the off-line OCR 3 may be omitted. In this case, the control part 25 of the distribution device 21 performs processing from step S17, to be described later.

Namely, the control part 25 of the distribution device 21 first distributes the VC information accumulated in the storage part 26 and a demand for the recognition processing for the sorting information to the off-line OCR 3 (step S11). The off-line OCR 3 having received the VC information distributed from the distribution device 21 applies the recognition processing for the sorting information to the image on the paper sheet included in the VC information and returns the processing result to the distribution device 21 (step S12). When the distribution device 21 receives the recognition result of the sorting information correspond to the VC information from the off-line OCR 3 (step S13), the control part 25 of the distribution device 21 determines whether or not the recognition processing for the sorting information performed by the off-line OCR 3 is successful (step S14).

When the recognition processing for the sorting information performed by the off-line OCR 3 is successful, that is, when the sorting information uniquely specified as the result of the recognition processing correspond to the VC information is received from the off-line OCR 3 (step S14, YES), the control part 25 of the distribution device 21 adopts the sorting information, which is the recognition result received from the off-line OCR 3, as the sorting information correspond to the VC informationpaper sheet of the paper sheet (step S15). In this case, the control part 25 of the distribution device 21 supplies the adopted sorting information to the sorting machine 1 so that the sorting information corresponds to the discrimination information of the paper sheet included in the VC information (step S16). According to this constitution, in the sorting machine 1 having received the sorting information, corresponded to the discrimination information of the paper sheet, from the distribution device 21, the sorting information can be determined based on each piece of discrimination information of the paper sheet.

When a failure of the recognition processing for the sorting information performed by the off-line OCR 3 is determined, that is, when the control part 25 of the distribution device 21 receives the information indicating that the sorting information correspond to the VC information cannot be recognized, from the off-line OCR 3 (step S14, NO), the control part 25 initializes a variable N by, for example, defining that N = 0 (step S17), and thereafter performs the coding processing to VC information performed by the VCD 22 (steps S18 to S20).

Namely, the control part 25 of the distribution device 21 distributes the VC information, which is accumulated in the storage part 26 and should be subjected to the coding processing by the VCD 22, to any one of the VCDs 22 (step S18). The VCD 22 having received the VC information from the distribution device 21 applies the coding processing to the VC information (step S19). In the coding processing, the VCD 22 displays the image on the paper sheet included in the VC information on a display and accepts the key entry of the sorting information from an operator. In this state, when the operator inputs by key entry the sorting information from a keyboard or the like, the VCD 22 corresponds the result of the key entry (key entry information) to the discrimination information of the paper sheet and transmits the key entry information to the distribution device 21.

When the control part 25 of the distribution device 21 receives the key entry information, corresponded to the discrimination information of the paper sheet, from the VCD 22 (step S20), the control part 25 corresponds the received key entry information to the discrimination information of the paper sheet to accumulate the key entry information in the storage part 26 (step S21).

The control part 25 of the distribution device 21 accumulates the key entry information, supplied from the VCD 22, in the storage part 26 and thereafter performs the verification processing to the key entry information performed by the off-line OCR 3 (steps S22 to S24). Namely, the control part 25 distributes a verification processing request, the key entry information, the image on the paper sheet, and the discrimination information of the paper sheet to the off-line OCR 3 (step S22).

The off-line OCR 3 having received the key entry information, the image on the paper sheet, and the discrimination information of the paper sheet performs processing for determining whether or not the key entry information is correct using the program for verification processing (step S23). In the verification processing performed by the off-line OCR 3, the recognition processing for the sorting information applied to the image on the paper sheet is performed, while assuming the key entry information to be an answer. According to the verification processing, when it is determined that the key entry information corresponds to the recognition result of the sorting information entered in the paper sheet, the off-line OCR 3 corresponds the result of the verification processing, showing that the key entry information is correct, to the discrimination information of the paper sheet and transmits the result to the distribution device 21. Meanwhile, when it is determined that the key entry information does not correspond to the recognition result of the sorting information entered in the paper sheet, the off-line OCR 3 corresponds the result of the verification processing, showing that the key entry information is not correct, to the discrimination information of the paper sheet and transmits the result to the distribution device 21.

When the control part 25 of the distribution device 21 receives the result of the verification processing from the off-line OCR 3 (step S24), the control part 25 determines whether or not the key entry information is confirmed to be correct, based on the received result of the verification processing (step S25). When it is determined that the key entry information is confirmed to be correct (step S25, YES), the control part 25 adopts the key entry information as the sorting information of the paper sheet (step S15). In this case, the control part 25 corresponds the adopted sorting information to the discrimination information of the paper sheet included in the VC information and supplies the sorting information to the sorting machine 1 (step S16).

When it is determined that the key entry information is not confirmed to be correct (step S25, NO), the control part 25 of the distribution device 21 performs the coding processing a plurality of times until reaching a predetermined time, whereby the control part 25 performs a processing for determining the sorting information of the paper sheet (steps S26 to S28). Namely, when the key entry information is not confirmed to be correct according to the verification processing performed by the off-line OCR 3, the control part 25 of the distribution device 21 determines whether or not the variable N is not less than a predetermined number (step S26). When it is determined that the variable N is less than the predetermined number (step S26, NO), the control part 25 of the distribution device 21 increments the variable N (step S27), and then returns to step S18. According to this processing, the control part 25 of the distribution device 21 performs the processing from steps S18 to S27 a predetermined number of times until the key entry information is confirmed to be correct in the verification processing performed by the off-line OCR 3.

When it is determined that the variable N is not less than the predetermined number in step S26, that is, when the frequency of re-performing the coding processing is not less than a predetermined number (step S26, YES), the control part 25 of the distribution device 21 determines the key entry information adopted as the sorting information from a plurality of pieces of the key entry information with respect to the image on the paper sheet (step S28). When the key entry information adopted as the sorting information is determined by the processing of step S28, the control part 25 of the distribution device 21 corresponds the adopted sorting information to the discrimination information of the paper sheet included in the VC information and supplies the sorting information to the sorting machine 1 (step S16).

In the processing of step S28, it is considered to conduct a vote based on a plurality of pieces of the key entry information to adopt the information with the largest number of votes as the sorting information. Further, in the processing of step S28, the key entry information exceeding a majority of a plurality of pieces of the key entry information may be adopted as the result of the verification processing. Instead of the processing of step S28, the information indicating that the sorting information of the paper sheet cannot be determined may be adopted as the processing result. In this case, the paper sheet in which the key entry information is not confirmed to be correct by the verification processing are determined to be not processable.

However, the processing of step S28 is assumed to be applied to the paper sheet in which the key entry information cannot be confirmed to be correct by the verification processing. Namely, in the algorithm used in the program for verification processing performed by the off-line OCR 3, there is a possibility that there is the image on the paper sheet in which the key entry information cannot be confirmed to be correct, despite the presence of correct key entry information. Even in such a case, according to the processing of step S28, the most probable key entry information can be determined from a plurality of pieces of the key entry information.

Next, a second processing example used in the present sorting system will be described.

In the second processing example, the off-line OCR 3 performs the processing for confirmation (the verification processing) with respect to the recognition result obtained from the on-line OCR 11 in addition to the key entry information input by key entry in the VCD 22.

Namely, in the second processing example, the image on the paper sheet in which the sorting information can be recognized by the on-line OCR 11 and the recognition result, which will be subjected to the verification processing, are supplied to the off-line OCR 3. In this case, in the verification processing performed by the off-line OCR 3, the recognition processing is applied to the image on the paper sheet while assuming the recognition result from the on-line OCR 11 to be an answer.

When the same recognition result as the recognition result from the on-line OCR 11 is obtained by the recognition processing applied to the image on the paper sheet, the off-line OCR 3 determines that the recognition result from the on-line OCR 11 can be confirmed to be correct. Meanwhile, when the same recognition result as the recognition result from the on-line OCR 11 cannot be obtained by the recognition processing applied to the image on the paper sheet, the off-line OCR 3 determines that the recognition result from the on-line OCR 11 cannot be confirmed to be correct. Further, as in the first processing example, the coding processing performed by the VCD 22 and the verification processing of the key entry information performed by the off-line OCR 3 are applied to the image on the paper sheet of which the recognition result from the on-line OCR 11 cannot be confirmed to be correct.

Next, a flow of the second processing example will be described.

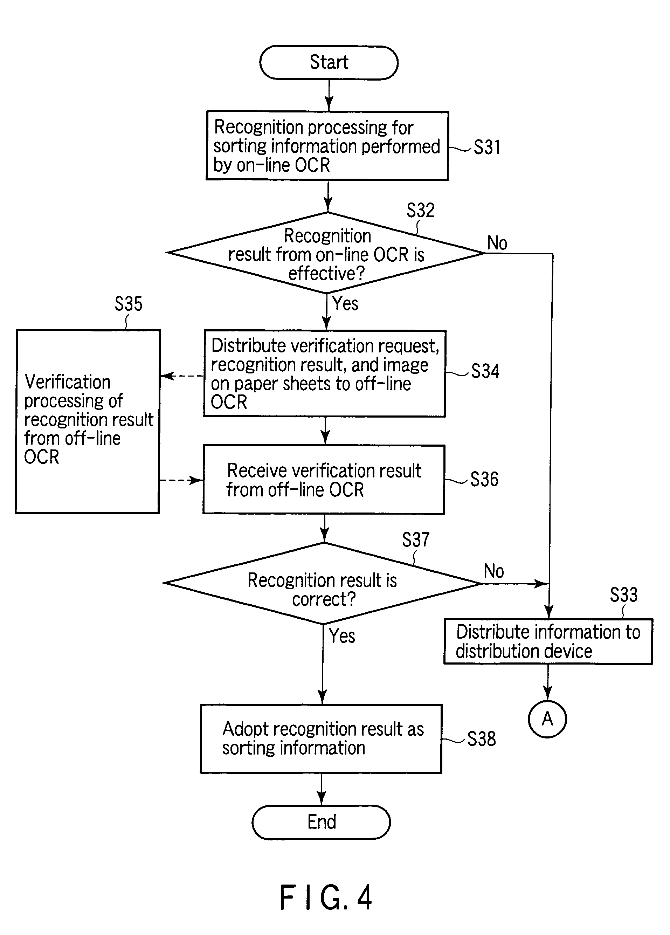

FIG. 4 is a flow chart for explaining the flow of the second processing example in the present sorting system. In the flow chart shown in FIG. 4, the operation of the on-line OCR 11 will be mainly described.

In the sorting machine 1, the image on the paper sheet scanned by the scanner 13 is supplied to the on-line OCR 11. The on-line OCR 11 having received the image on the paper sheet scanned by the scanner 13 applies the recognition processing for the sorting information to the image on the paper sheet, based on a recognition program for the on-line OCR 11 (step S31).

When the sorting information of the paper sheet cannot be recognized by the on-line OCR 11 (step S32, NO), the on-line OCR 11 transmits, as the VC information, the image on the paper sheet and the information including the discrimination information of the paper sheet and the recognition result to the image on the paper sheet to the distribution device 21 (step S33). In this case, the distribution device 21 accumulates the VC information, supplied from the on-line OCR 11, in the storage part 26 and performs the processing following step S17 described in the first processing example.

When the sorting information of the paper sheet can be recognized by the on-line OCR 11 (step S32, YES), the on-line OCR 11 performs a processing for requesting the off-line OCR 3 to perform the verification processing for the recognition result (step S34). In this example, it is assumed that the on-line OCR 11 requests the off-line OCR 3 to perform the verification processing for the recognition result through the distribution device 21. Namely, when the sorting information of the paper sheet can be recognized, the on-line OCR 11 transmits the verification processing request, the recognition result of the sorting information to the paper sheet, and the image on the paper sheet to the off-line OCR 3 through the distribution device 21.

The off-line OCR 3 having received the verification processing request applies the verification processing to the recognition result from the on-line OCR 11 (step S35). In the verification processing performed by the off-line OCR 3 in step S33, as with the verification processing for the key entry information, the recognition processing for the sorting information is applied to the image on the paper sheet, while assuming the recognition result from the on-line OCR 11 to be an answer. Also in this case, since the recognition processing is performed while assuming the recognition result from the on-line OCR 11 to be an answer, the recognition result with high accuracy can be expected.

For example, when it is determined by the verification processing that the recognition result from the on-line OCR 11 corresponds to the recognition result of the sorting information entered in paper sheet, the off-line OCR 3 transmits the result of the verification processing, indicating that the recognition result from the on-line OCR 11 is correct, to the on-line OCR 11 through the distribution device 21. When it is determined by the verification processing that the recognition result from the on-line OCR 11 does not correspond to the recognition result of the sorting information entered in paper sheet, the off-line OCR 3 transmits the result of the verification processing, indicating that the recognition result from the on-line OCR 11 is not correct, to the on-line OCR 11 through the distribution device 21.

The on-line OCR 11 receives the result of the verification processing from the off-line OCR 3 through the distribution device 21 (step S36). When the on-line OCR 11 receives the result of the verification processing, indicating that the recognition result is confirmed to be correct, from the off-line OCR 3 (step S37, YES), the on-line OCR 11 adopts the recognition result as the sorting information of the paper sheet (step S38).

When the on-line OCR 11 receives the result of the verification processing, indicating that the recognition result is not confirmed to be correct, from the off-line OCR 3 (step S37, NO), the on-line OCR 11 transmits, as the VC information, the image on the paper sheet, the discrimination information of the paper sheet, and the recognition information for the image on the paper sheet to the distribution device 21 (step S33). In this case, the distribution device 21 accumulates the VC information, supplied from the on-line OCR 11, in the storage part 26 and performs the processing following step S17 described in the first processing example.

The recognition result from the on-line OCR 11 should be obtained at a timing at which the paper sheet can be sorted online (for example, in the configuration example shown in FIG. 1, the paper sheet reach the printing position where the bar code is printed by the bar code writer 14). Namely, the verification processing for the recognition result from the on-line OCR 11 is required to be completed within a predetermined time. Therefore, the distribution device 21 and the off-line OCR 3 preferentially perform the processing so that the verification processing for the recognition result from the on-line OCR 11 is completed within a predetermined time. Further, for the purpose of accelerating the speed of the verification processing for the recognition result from the on-line OCR 11, the on-line OCR 11 and the off-line OCR 3 may be directly connected to each other.

Next, a third processing example used in the present sorting system will be described.

The third processing example is a variation of the second processing example. In the second processing example, when the sorting information cannot be recognized by the recognition processing performed by the on-line OCR 11, the processing proceeds to step S17, and the coding processing is performed by the VCD 22. Meanwhile, in the third processing example, when the sorting information cannot be recognized by the recognition processing performed by the on-line OCR 11, the processing proceeds to step S11 described in the first processing example. The recognition processing is first performed by the off-line OCR 3, whereby a reduction in manpower is realized.

Next, a flow of the third processing example will be described.

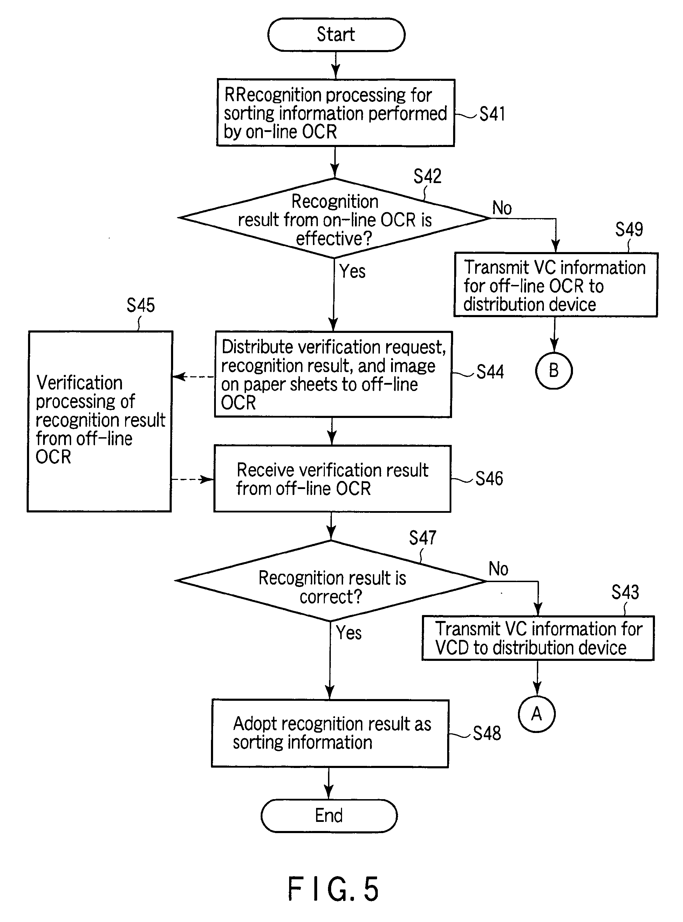

FIG. 5 is a flow chart for explaining the flow of the third processing example in the present sorting system. The flow chart of FIG. 5 shows, as in the flow chart of FIG. 4, the flow of the processing performed by the on-line OCR 11. Since the processing of steps S41 to S48 in FIG. 5 is substantially the same as the processing of steps S31 to S38 in FIG. 4, a detailed description will be omitted.

Namely, in the third processing example shown in FIG. 5, in the processing of step S49, when the sorting information cannot be recognized by the recognition processing performed by the on-line OCR 11 (step S42, NO), the on-line OCR 11 transmits, as the VC information (VC information for an off-line OCR) of which the recognition processing for the sorting information should be performed by the off-line OCR, the image on the paper sheet and the VC information including the discrimination information of the paper sheet and the recognition result to the distribution device 21. In this case, the distribution device 21 accumulates the VC information as the VC information for an off-line OCR. The control part 25 of the distribution device 21 performs control so that the VC information is distributed to the off-line OCR 3 before the VC information is distributed to the VCD 22, whereby the recognition processing for the sorting information is performed by the off-line OCR 3. According to this processing, in the third processing example, the image on the paper sheet, of which the recognition result cannot be obtained from each recognition processing performed by the on-line OCR 11 and the off-line OCR 3, as the image to be subjected to the coding processing is distributed to each of the VCDs 22.

As described above, in the present embodiment, the off-line OCR applies the recognition processing to the image on the paper sheet, while the information received from outside, such as the key entry information input by key entry from an operator or the recognition result obtained from the on-line OCR, is assumed to be the recognition result, whereby the off-line OCR performs the verification processing of the information received from outside. In other words, the off-line OCR performs the verification processing for determining whether or not the information received from outside, such as the key entry information input by key entry from an operator or the recognition result from the on-line OCR, is recognized as the result of the recognition processing for the sorting information of the image on the paper sheet.

For example, when it is determined that the recognition result of the sorting information included in the image on the paper sheet is regarded to correspond to the information received from outside, the off-line OCR determines that the information received from outside is confirmed to be correct. Meanwhile, when it is determined that the recognition result of the sorting information entered in paper sheet cannot be regarded to correspond to the information received from outside, the off-line OCR determines that the information received from outside cannot be confirmed to be correct.

According to the above verification processing, whether or not the key entry information input by key entry from an operator or the recognition result from the on-line OCR is correct can be determined based on the sorting information actually described on the paper sheet. According to this constitution, incorrect key entry or incorrect recognition which cannot be found only by simply comparing with a database can be determined, whereby the incorrect key entry or the incorrect recognition can be reduced.

Further, in the verification processing performed by the off-line OCR, the incorrect key entry or the incorrect recognition in the key entry information from an operator or the recognition result from the on-line OCR can be found with high accuracy based on the character recognition result for the actual image on the paper sheet. Namely, in the verification processing, it is possible to determine with high accuracy that the key entry information or the recognition result from the on-line OCR partially differs from the actual sorting information on the paper sheet. Consequently, when the key entry information or the recognition result from the on-line OCR partially differs from the actual sorting information on the paper sheet, the off-line OCR can correct a part, which has been incorrectly input by key entry or incorrectly recognized, based on the result of the character recognition applied to the actual image on the paper sheet.

The above verification processing is used in the sorting system for sorting the paper sheet based on the sorting information described on the paper sheet, whereby incorrect sorting due to the incorrect key entry or the incorrect recognition can be reduced. Especially, the above sorting system is used in a sorting system for sorting mail, whereby the incorrect sorting causing incorrect distribution of mail or the delay in delivery can be reduced.

As described above, the image on the paper sheet from the distribution device 21 and the key entry information input by key entry in the VCD 22 or the information of the recognition result obtained from the on-line OCR 11, which is the sorting information described on the paper sheet, are given to the off-line OCR 3. The off-line OCR 3 applies the recognition processing to the image on the paper sheet, while assuming the given information to be the recognition result. Based on the result of the recognition processing, the off-line OCR 3 determines whether or not the given information is recognized as the sorting information described on the paper sheet.

In the video coding system described in the above embodiment, whether or not the key entry information input by key entry from an operator or the recognition result from the on-line OCR is correct can be determined by the character recognition applied to the image on the paper sheet by the off-line OCR. Accordingly, in the video coding system described in the above embodiment, the incorrect key entry or the incorrect recognition which cannot be found only by simply comparing with a database can be determined, whereby the incorrect key entry or the incorrect recognition can be reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A video coding system which specifies sorting information included in an image, **characterized by** comprising:
an accumulation section (21) which accumulates an image including the sorting information expressed by characters; and
a recognition section (3) which, when information presumed to be the sorting information included in the image accumulated in the accumulation section is given, applies a character recognition processing to the image, while assuming the given information, presumed to be the sorting information, to be a recognition result, so as to confirm whether or not the given information is correct as the sorting information included in the image.

2. The video coding system according to claim 1, **characterized by** further comprising:
a terminal section (22) used for input by key entry of the sorting information included in the image accumulated in the accumulation section,
wherein when key entry information input by key entry through the terminal section is given to the recognition section, the recognition section (3) applies the character recognition processing to the image, while assuming the key entry information to be a recognition result, so as to confirm whether or not the key entry information is correct as the sorting information included in the image.

3. The video coding system according to claim 2, **characterized in that** the recognition section (3) further applies the character recognition processing for the sorting information to the image accumulated in the accumulation section, and
the terminal section (22) is used for the input by key entry of the sorting information included in an image in which the sorting information is not recognized by the character recognition processing.

4. The video coding system according to claim 1, **characterized in that** when the information, which is obtained by the character recognition processing for the sorting information applied to the image, accumulated in the accumulation section (21), by an external recognition device, is given to the recognition section, the recognition section (3) applies the character recognition processing for the sorting information to the image, while assuming the information, obtained in the external recognition device, to be a recognition result, so as to confirm whether or not the information obtained in the external recognition device is correct as the sorting information included in the image.

5. A sorting system which sorts paper sheet based on sorting information given to the paper sheet, **characterized by** comprising:
a scanner (13) which scans an image on the paper sheet having the sorting information;
a first recognition section (11) which applies a recognition processing for the sorting information to the image on the paper sheet scanned by the scanner;
an accumulation section (21) which accumulates the image on the paper sheet in which the sorting information is not recognized by the first recognition section;
a terminal section (22) used for input by key entry of the sorting information of the paper sheet on the basis of the image on the paper sheet accumulated in the accumulation section; and
a second recognition section (3) which applies a recognition processing for the sorting information to the image on the paper sheet, while assuming key entry information, input by key entry through the terminal section, to be a recognition result, so as to confirm whether or not the key entry information is correct as the sorting information given to the paper sheet.

6. The sorting system according to claim 5, **characterized in that** the second recognition section (3) applies the recognition processing for the sorting information to the image on the paper sheet in which the sorting information is recognized by the first recognition section (11), while assuming the sorting information, which is a recognition result from the first recognition section, to be the recognition result, whereby the second recognition section confirms whether or not the sorting information as the recognition result from the first recognition section is correct as the sorting information given to the paper sheet.

7. The sorting system according to claim 5, **characterized in that** the second recognition section (3) further applies the recognition processing for the sorting information to the image on the paper sheet, in which the sorting information is not recognized by the first recognition section (11), based on an algorithm different from the first recognition section, and
the accumulation section (21) accumulates the image on the paper sheet in which the sorting information is not recognized by the second recognition section.

8. The sorting system according to claim 6, **characterized in that** the second recognition section (3) further applies the recognition processing for the sorting information to the image on the paper sheet, in which the sorting information is not recognized by the first recognition section (11), based on an algorithm different from the first recognition section, and
the accumulation section (21) accumulates the image on the paper sheet in which the sorting information is not recognized by the second recognition section.

9. A video coding method, used for a video coding system specifying sorting information included in an image, **characterized by** comprising:
accumulating an image including the sorting information expressed by characters; and
when information presumed to be the sorting information included in the accumulated image is given, applying a character recognition processing to the image, while assuming the given information, presumed to be the sorting information, to be a recognition result, so as to confirm whether or not the given information is correct as the sorting information included in the image.

10. A sorting method, used for a sorting system for sorting paper sheet based on sorting information given to the paper sheet, **characterized by** comprising:
scanning an image on the paper sheet having the sorting information;
applying a recognition processing for the sorting information to the scanned image on the paper sheet;
accumulating the image on the paper sheet in which the sorting information is not recognized; and
when the sorting information of the paper sheet is input by key entry based on the accumulated image on the paper sheet, applying a recognition processing for the sorting information to the mage of the paper sheet, while assuming key entry information, input by key entry, to be a recognition result, so as to confirm whether or not the key entry information is correct as the sorting information given to the paper sheet.
